# EUROPEAN PATENT APPLICATION

(11) **EP 1 992 471 A2**
(43) Date of publication of application: **19.11.2008**
(21) Application number: 08103964.6
(22) Date of filing: 14.05.2008
(51) Int. Cl.: B29C 47/00, B29C 47/12

(54) **Apparatus for making an extensible plastic film having regions of varying material thickness**

(30) Priority: 15.05.2007 IT RM20070272
(71) Applicant: AKRO-FLEX S.a.s. di Garegnani Antonio & C., 20080 Vermezzo (MI) (IT)
(72) Inventor: Garegnani, Antonio, 20080 Vermezzo (MI) (IT)
(74) Representative: Sarpi, Maurizio

(57) **Abstract**

An apparatus for the in-cast production of an extensible film of plastic material for packaging having reinforcing thickened portions (I) in a longitudinal direction and having resistance to transverse tensile stress that is comparable with that of a bubble-film product.

## Description

The present invention relates to the packaging sector, and in particular refers to an apparatus for in-cast production of an extensible film of plastic material reinforced in a longitudinal direction, the resistance of which to transverse tensile stress is comparable with that of a bubble-film product of a known type.

Currently known on the market are extensible films produced in cast that present a high resistance to tensile stress, when this is applied in the direction of orientation of the film, but are particularly weak in regard to tensile stress applied in the direction transverse to the preceding one.

Consequently, a task of the present invention is to overcome this disadvantage, by providing an apparatus for the in-cast production of a longitudinally reinforced extensible film, which, even though it is produced in cast, presents high resistance both to longitudinal tensile stress and to transverse tensile stress, behaving substantially in a way similar to a bubble-film product.

This has been obtained, according to the invention, by providing an extensible film that, albeit having a unidirectional orientation that determines a high resistance thereof to tensile stress when this is applied in the direction of orientation of the film itself, is characterized by the presence of longitudinal thickened regions that are able to undergo transverse deformation when a tensile stress transverse to the orientation of the film is applied to the film itself.

A better understanding of the invention will emerge from the ensuing detailed description with reference to the annexed drawings, which illustrate, purely by way of example, a preferred embodiment thereof and in which:
Figure 1 is a cross-sectional view of a detail of the apparatus for the in-cast production of a longitudinally reinforced extensible film, which forms the subject of the invention, regarding a mould for producing said extensible film;
Figure 2 is a cross-sectional view according to the plane of trace A-A indicated in Figure 1; and
Figure 3 shows a portion of extensible film according to the invention.

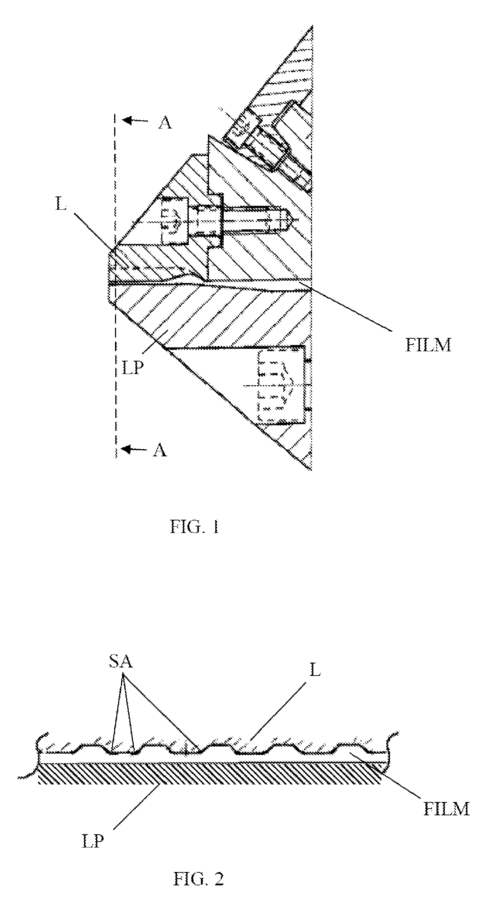

With reference to Figures 1 and 2, in the preferred embodiment that is described, there is provided an apparatus for the in-cast production of a longitudinally reinforced extensible packaging film, comprising a mould provided with at least one lip L having two or more recesses for the formation on the extensible film itself of corresponding reinforcements I with longitudinal development.

According to a peculiar characteristic of the invention, said recesses are defined by a plurality of projecting parts with which said lip L is provided and which have a substantially rectangular shape with the external edges SA that are sensibly rounded and not simply chamfered.

Thanks to said artifice, each of said reinforcements I is substantially constituted by a thickened region, which is provided, in the areas of radiusing with those parts of film having a reduced thickness S, with rounded portions designed to prevent occurrence of tearing precisely in the proximity of said areas of radiusing or to prevent said areas of radiusing from turning into areas of tearing.

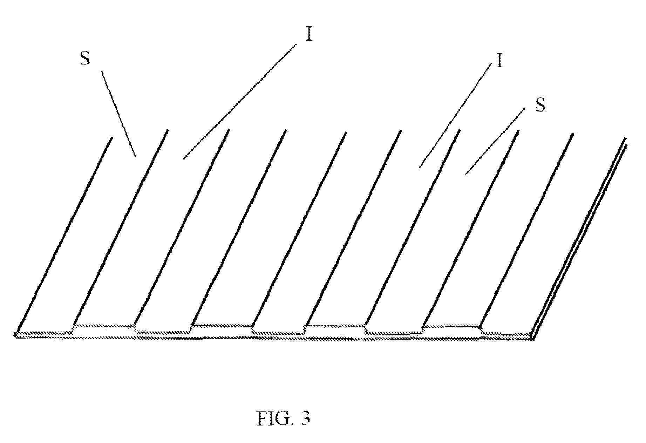

In the embodiment described, there is provided a further lip LP that is opposite to said lip L and is plane. In this case, the extensible film that is produced by the apparatus has a plane face and a fretted face. Consequently, the cross section of the film has a plurality of oversized areas that constitute the reinforcements I of the film, preferably set at equal distances apart from one another (Figure 3).

In a variant of the invention, it is envisaged that said further lip LP will be replaced by a second lip identical to the aforesaid lip L and set specularly thereto so as to obtain a film provided with a plurality of longitudinal reinforcements I present on both of the faces of the film itself.

It should be noted that, advantageously, it is precisely the presence of longitudinal reinforcements I that bestow upon the film the high transverse deformability that characterizes it in so far as each reinforcement I is able to reduce its original thickness, increasing its width when the film is subjected to a transverse tensile stress, redistributing the elastic material present in the reinforcement itself laterally and preventing tearing of the film itself.

The present invention has been described and illustrated according to a preferred embodiment and a variant, but it is understood that any person skilled in the branch may make modifications and/or equivalent replacements thereto without thereby departing from the sphere of protection of the present industrial patent right.

## Claims

1. An apparatus designed for in-cast production of an extensible film of plastic material for packaging having longitudinal reinforcements or thickened regions (I) and having resistance to transverse tensile stress, **characterized in that** the areas of radiusing between said reinforcements (I) with areas of greater thickness and the parts of film of reduced thickness (S) are rounded in order to prevent formation of tears precisely in the proximity of said areas of radiusing, thus obtaining that, when the film is subjected to a transverse tensile stress, each reinforcement (I) is designed to widen, thus reducing its original thickness so as to redistribute the elastic material present within it, thus preventing tearing of the film itself.

2. The apparatus according to the preceding claim, **characterized in that** it comprises a mould provided with at least one lip (L) having two or more recesses designed to form on the extensible film corresponding reinforcements (I) with longitudinal development.

3. The apparatus according to the preceding claim, **characterized in that** said recesses are defined by a plurality of projecting parts with which said lip (L) is provided and which have a substantially rectangular shape with external edges (SA) that are sensibly rounded and not simply chamfered.

4. The apparatus according to the preceding claim, **characterized in that** it is provided with a further lip (LP) that is opposite to said lip (L) and is plane, thus obtaining an extensible film that has a face provided with two or more longitudinal reinforcements (I), whilst the other face is plane.

5. The apparatus according to Claim 3, **characterized in that** it is provided with a further lip that is identical to said lip (L) and set specularly thereto, thus obtaining an extensible film with a plurality of longitudinal reinforcements (I) present on both faces of the film itself.

6. An apparatus designed for in-cast production of an extensible film of plastic material for packaging having longitudinal reinforcements or thickened regions (I) and having a resistance to transverse tensile stress, substantially as described in the present description and illustrated in the attached drawings.
